# EUROPEAN PATENT SPECIFICATION

(11) **EP 1 550 367 B1**
(45) Date of publication and mention of the grant of the patent: **25.07.2007**
(21) Application number: 04257786.6
(22) Date of filing: 15.12.2004
(51) Int. Cl.: A01G 9/02

(54) **Plant container**
Pflanzbehälter
Conteneur de plante

(30) Priority: 15.12.2003 GB 0329048
(43) Date of publication of application: 06.07.2005
(73) Proprietor: Barcham Trees Plc, Ely, Cambridgeshire CB7 5XF (GB)
(72) Inventor: Glover, Michael, Oakham, LE15 8NQ (GB)
(74) Representative: Boff, James Charles

(56) References cited:
- WO-A-98/53665
- GB-A- 2 120 068
- US-A- 4 635 394
- US-B1- 6 195 935

## Description

The invention relates to plant-growing containers, particularly for trees.

Field grown trees are very unreliable when transplanted and can be compared to fish out of water from the time they are lifted out of the ground to the time they are planted again. Low transplantation success has been a key driver for growers to produce their trees in containers with a fully intact and unwounded root system. One grower for example now produces in excess of 100,000 trees per year on 140 acres of land based near Cambridge.

Black containers are traditionally used for containerizing nursery stock but this produces a spiralled root system. In time, these roots thicken forming a constricted mass that finds it difficult to spread out into surrounding soil after planting. Trees planted from black containers tend not to thrive, as they establish poorly anchored root systems and are prone to blow over in strong winds.

Aware of these problems we, as the grower mentioned above, turned some years ago to white containers. Originally suggested in Australia to avoid roots reaching an excessive temperature in sunlight, these containers have been found to produce an ideal root system. Far from spiralling round the inside of the container wall, the roots, which show a negative phototropism, remain in the body of the compost and grow downwards, keeping away from the light that passes through the container walls. The result is an untangled root system that looks as though it has been combed vertically downwards, with the roots establishing quickly when planted out as they are not impeding each others growth. White also reflects heat, keeping the roots at the right temperature on hot summer days.

The containers were initially made of polythene and although it produced the desired root system, it was difficult to handle. Aggregate bags with handles - as used by builder's merchants for deliveries of bulk materials - were therefore trialled and these worked well. Having settled on the material and general design we have had similar purpose-made bags produced from double laminated woven polyethylene with ultra violet stabilizer at 4% and the sides comprise a plurality of holes scattered in a non-uniform manner (peppered) to aid oxygen flow within the compost.

Other plant containers such as that disclosed in GB 2 404 321 use a resilient plastics material as a transparent liner for a plant pot, the liner isn't intended for sole use as a plant container, but is used within an existing plant container. The liner is made of a transparent or translucent material in order for inspection of the roots to be carried out conveniently without disturbance to the growth of the plant. Drainage holes are also provided in the liner.

In principle the containers can be of any material that at least for the sides is translucent, so that roots, which avoid light, do not reach the container wall and start growing along it, but the present invention relates to those made up from plastic sheeting, particularly woven or fibre-reinforced plastic sheeting, such as polyethylene, and provides several improvements usable separately or together as set out in the claims, as well as a new method of using existing containers.

Aggregate bags as used by builder's merchants are made in a gusseted construction simply sewn across the bottom so that separate sheets of material do not have to be joined and potentially weakening seams, for the dense materials carried, are avoided. Plant containers have hitherto followed the same construction but we have found it to show disadvantages in use in that roots grow between the different layers resulting in damage and difficulty in removal at planting time. We propose instead a container with discontinuous base and sides seamed together to give flush internal surfaces allowing ready separation from the root ball. Seams of sufficient strength for this application are readily made, and the un-gusseted construction also allows for easy filling during the original planting of the containers with young stock.

A second improvement lies in incorporating a mulch mat in the top of the container. Current containers are provided with a drawstring at the opening, but while these allow the sides to be partly drawn together when the container with its grown plant is dispatched, they do not close the opening. We provide an extension of the edges of the opening with a sheet of material, conveniently permeable and conveniently but not necessarily the same sort of material that the rest of the container is made of, with a drawstring that allows the stem of the plant to be closely surrounded by the material when the string is tightened. At planting, the container wall can then be slit round circumferentially to leave part of the wall in place and the extension sheet as a mulch mat keeping weeds at bay and conserving applied water. At least the drawstring and optionally the whole sheet, in this application, is suitably made of biodegradable material so that the stem of the growing plant once established is not strangled.

A third improvement is in relation to root barriers. Many trees planted in paving or other hard areas are prone to lift them over time as the root system colonises the soil and expands. At present, separate root barriers are used to control this lifting but they are costly to buy and install.

We have seen that the container itself can be used as a root barrier if the upper part of the container wall, around the opening, is left in place at planting. This can be put into effect simply as a new method of planting, with unmodified containers, where the upper part of the walls is normally of folded, double-thickness construction for strength and for attachment of handles. However the new approach is best combined with the use of the mulch mat discussed above. A cutting line may be marked on the wall of a container as a guide to how much to leave.

The invention is illustrated in the accompanying drawings, which show in Fig 1 a container, with a young tree stem, and in Figs 2 and 3 the same container with the lower half of the bag removed, as at planting and with the root system after three years. Fig 3 additionally shows the root barrier concept.

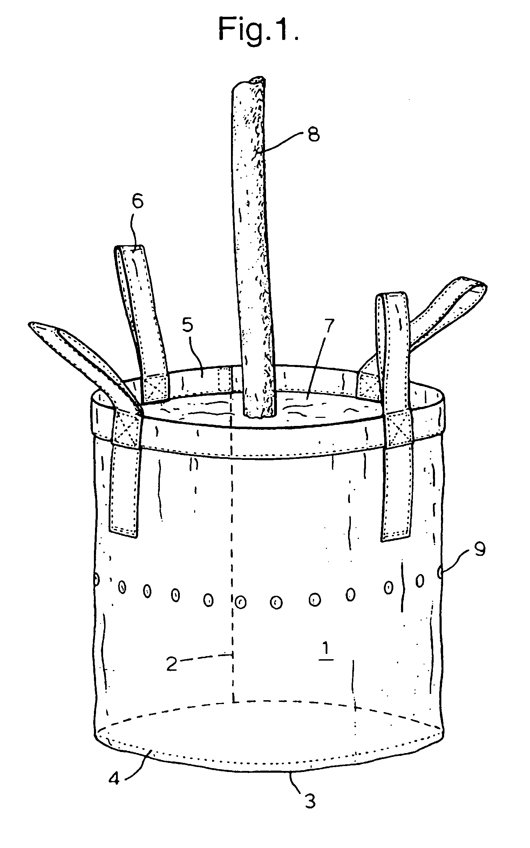

In the drawings, referring to Fig 1, the container 1 has continuous sides seamed up vertically at 2 and made of light-stabilised double-laminated woven polyethylene. The base 3 is made of the same material, though it need not specifically be, sewn at 4. The top edge 5 is doubled and seamed and handles 6 are provided. A permeable and/or biodegradable skirt/mulch mat 7 surrounds the stem 8 of a tree, pulled up by a drawstring (not shown). At 9 is cutting line.

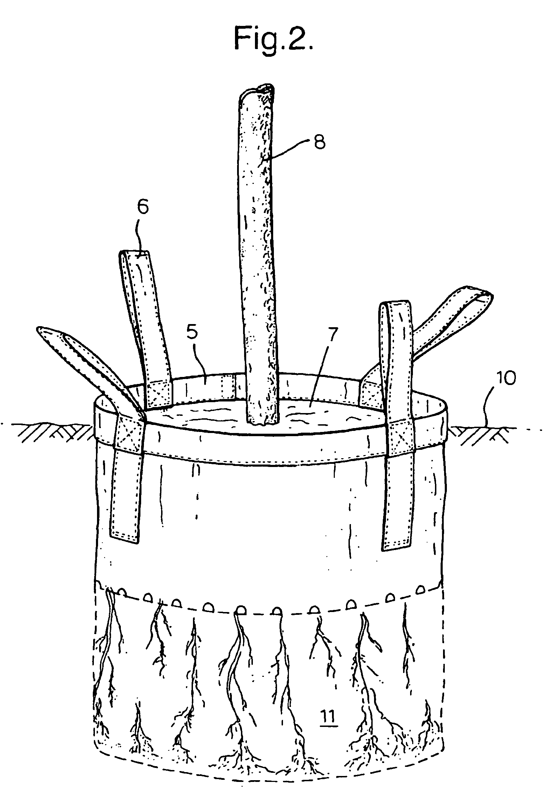

Fig 2 shows the container after planting with the soil level at 10 and the root distribution of the tree shown at 11 where the bottom part of the container has been removed and a certain amount of the compost next to the container wall has been lost.

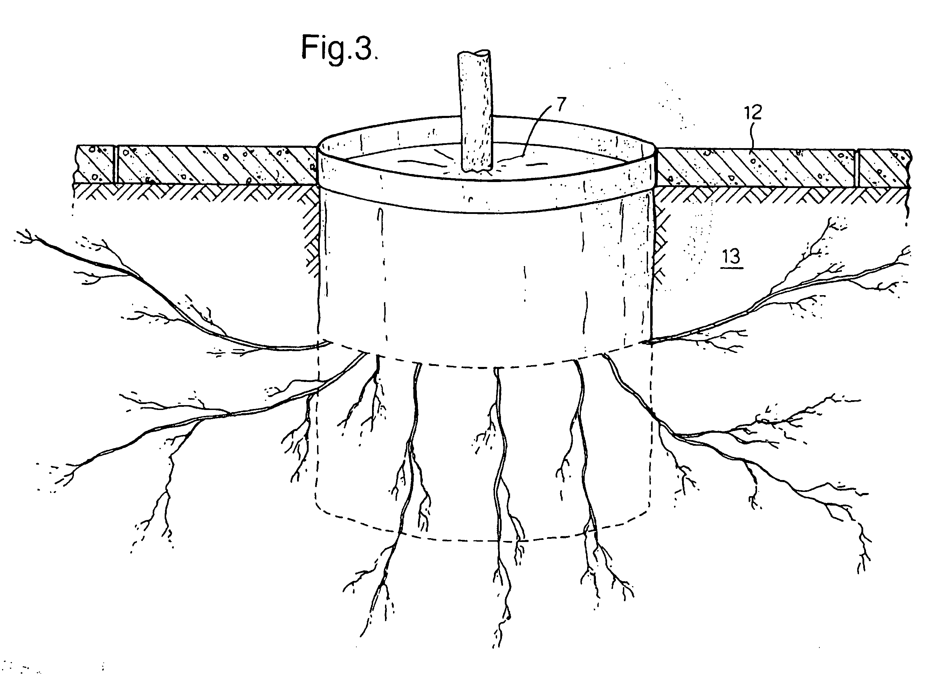

Fig 3 shows planting in paving slabs 12 with the root system as it will be at some 3 years after planting, well spread and with a root-barrier zone 13 brought into existence by retention of the upper part of the container.

## Claims

1. A plant-growing container of translucent plastics sheet with a base and sides, and the sides extended at the top by a mulch mat, having central opening area through which the plant extends, that can be drawn about the stem of the plant at final planting, **characterised in that** the sides are marked circumferentially with a cutting line indicating an extent of the lower part of the container to be discarded at planting.

2. A plant-growing container according to claim 1 provided with a drawstring running through the mulch mat at the opening to allow the sides to be partly drawn together.

3. A plant-growing container according to any of claims 1 or 2, where the mulch mat and/or the drawstring is/are biodegradable.

4. A plant-growing container according to any of claims 1 to 3 where the base and sides of the container are seemed together to give a flush internal surface.

5. A plant-growing container according to any of claims 1 to 4 where the translucent plastic material is a double laminated woven polyethylene with ultra violet stabilizer.

6. A plant-growing container according to any of claims 1 to 5 where the plastic material is woven or fibre-reinforced.

7. A plant-growing container according to any of claims 1 to 6 where the container comprises a plurality of holes scattered in a non-uniform manner to aid oxygen flow.

8. A plant-growing container according to any of claims 1 to 7 where the upper part of the container is of folded, double-thickness construction.

9. A method of cultivating trees, using containers of any one of claims 1 to 8, in hard-surfaced areas wherein the trees, grown in containers of translucent plastics sheet with a base and sides, are planted with retention of the upper part of the container sides as a root barrier, the lower part of the sides and the base being discarded.

## Patentansprüche

1. Pflanzenwachstumsbehälter aus lichtdurchlässiger Kunststofffolie mit einer Basis und Seiten, wobei die Seiten an der Oberseite durch eine Mulchmatte verlängert sind, die einen zentralen Öffnungsbereich aufweist, durch welchen sich die Pflanze erstreckt, und die um den Stamm der Pflanze beim endgültigen Pflanzen herumgezogen werden kann, **dadurch gekennzeichnet, dass** die Seiten in Umfangsrichtung mit einer Schnittlinie markiert sind, welche eine Ausdehnung des unteren Teils des Behälters anzeigt, das beim Pflanzen weggeworfen werden soll.

2. Pflanzenwachstumsbehälter nach Anspruch 1, der mit einer Zugschnur versehen ist, die sich durch die Mulchmatte an der Öffnung erstreckt, um zu ermöglichen, dass die Seiten teilweise zusammengezogen werden.

3. Pflanzenwachstumsbehälter nach Anspruch 1 oder 2, bei welchem die Mulchmatte und/oder die Zugschnur biologisch abbaubar sind bzw. ist.

4. Pflanzenwachstumsbehälter nach einem der Ansprüche 1 bis 3, bei welchem die Basis und die Seiten des Behälters zusammengenäht sind, um eine glatte innere Oberfläche zu erzielen.

5. Pflanzenwachstumsbehälter nach einem der Ansprüche 1 bis 4, bei welchem das lichtdurchlässige Kunststoffmaterial ein doppelt laminiertes Polyethylengewebe mit einem Ultraviolett-Stabilisator ist.

6. Pflanzenwachstumsbehälter nach einem der Ansprüche 1 bis 5, bei welchem das Kunststoffmaterial gewebt oder faserverstärkt ist.

7. Pflanzenwachstumsbehälter nach einem der Ansprüche 1 bis 6, bei welchem der Behälter mehrere Löcher aufweist, die ungleichmäßig verstreut angeordnet sind, um den Fluss von Sauerstoff zu unterstützen.

8. Pflanzenwachstumsbehälter nach einem der Ansprüche 1 bis 7, bei welchem das obere Teil des Behälters eine gefaltete Konstruktion mit doppelter Dicke aufweist.

9. Verfahren zum Anbauen von Bäumen, unter Verwendung von Behältern nach einem der Ansprüche 1 bis 8, in Bereichen mit harter Bodenoberfläche, wobei die Bäume, die in Behältern aus lichtdurchlässiger Kunststofffolie mit einer Basis und Seiten aufgewachsen sind, unter Beibehaltung des oberen Teils der Behälterseiten als eine Wurzelsperre gepflanzt werden, und das untere Teil der Seiten und die Basis weggeworfen werden.

## Revendications

1. Conteneur pour la croissance d'une plante en feuille plastique translucide avec une base et des côtés, et les côtés prolongés au sommet par une natte de paillis, ayant une zone d'ouverture centrale à travers laquelle la plante s'étend, qui peut être tirée autour de la tige de la plante à la plantation finale, **caractérisé en ce que** les côtés sont marqués circonférentiellement avec une ligne de coupe indiquant une étendue de la partie inférieure du conteneur qui doit être éliminée à la plantation.

2. Conteneur pour la croissance d'une plante selon la revendication 1, prévu avec un cordon à tirer parcourant la natte de paillis à l'ouverture pour permettre de tirer les côtés partiellement ensemble.

3. Conteneur pour la croissance d'une plante selon l'une quelconque des revendications 1 et 2, où la nappe de paillis et/ou le cordon à tirer est/sont biodégradable(s).

4. Conteneur pour la croissance d'une plante selon l'une quelconque des revendications 1 à 3, où la base et les côtés du conteneur sont cousus ensemble pour donner une surface interne lisse.

5. Conteneur pour la croissance d'une plante selon l'une quelconque des revendications 1 à 4, où la matière plastique translucide est un polyéthylène tissé double couche avec un stabilisateur contre les rayons ultraviolets.

6. Conteneur pour la croissance d'une plante selon l'une quelconque des revendications 1 à 5, où la matière plastique est tissée ou renforcée par des fibres.

7. Conteneur pour la croissance d'une plante selon l'une quelconque des revendications 1 à 6, où le conteneur comprend une pluralité de trous dispersés d'une façon non uniforme pour aider la circulation d'oxygène.

8. Conteneur pour la croissance d'une plante selon l'une quelconque des revendications 1 à 7, où la partie supérieure du conteneur a une construction pliée en double épaisseur.

9. Procédé de culture d'arbres, utilisant des conteneurs selon l'une quelconque des revendications 1 à 8, dans des zones en dur dans lesquelles les arbres, qui ont poussé dans des conteneurs en feuille plastique translucide avec une base et des côtés, sont plantés en conservant la partie supérieure des côtés du conteneur en tant que barrière contre les racines, la partie inférieure des côtés et la base étant éliminées.
